(19) **Europäisches Patentamt / European Patent Office / Office européen des brevets**

(11) **EP 1 988 780 B1**

(12) **EUROPEAN PATENT SPECIFICATION**

(45) Date of publication and mention
of the grant of the patent:
**28.10.2015 Bulletin 2015/44**

(21) Application number: **07705978.0**

(22) Date of filing: **28.02.2007**

(51) Int Cl.:
*A21D 13/00* (2006.01)     *A21D 13/04* (2006.01)
*A21D 2/36* (2006.01)     *A23L 1/164* (2006.01)

(86) International application number:
**PCT/IB2007/050657**

(87) International publication number:
**WO 2007/099506 (07.09.2007 Gazette 2007/36)**

(54) **FRUIT BASED DOUGH AND FABRICATED SNACK PRODUCTS MADE THEREFROM**

TEIG AUF FRUCHTBASIS, UND HIERMIT HERGESTELLTE SNACK-PRODUKTE

PÂTE À BASE DE FRUITS ET PRODUITS DE COLLATION FABRIQUÉS À PARTIR DE CELLE-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.02.2006 US 777485 P**

(43) Date of publication of application:
**12.11.2008 Bulletin 2008/46**

(73) Proprietor: **Pringles S.a.r.l.**
**2220 Luxembourg (LU)**

(72) Inventor: **VILLAGRAN, Maria, Dolores, Martinez-Serva**
**Mason, Ohio 45040 (US)**

(74) Representative: **Cabinet Plasseraud**
**52, rue de la Victoire**
**75440 Paris Cedex 09 (FR)**

(56) References cited:
| | |
|---|---|
| WO-A-96/29891 | WO-A-99/51111 |
| WO-A-2005/013719 | WO-A-2006/133388 |
| DE-U1-202006 004 097 | US-A- 4 950 491 |
| US-A- 5 132 127 | |

**Description**

Field of the Invention

The present invention relates to dough comprising fruit based materials and rice based material, which can be used in foods, especially fabricated snack products that are fruit containing.

Background of the Invention

Fabricated snack products prepared from doughs comprising starch-based materials are well-known in the art. These doughs typically comprise dehydrated potato products such as dehydrated potato flakes, granules, and/or flanules. The doughs can also comprise a number of other starch-based ingredients, such as wheat, corn, rice, tapioca, barley, cassava, oat, sago, masa, amaranth and potato starches, as well as flours. These other starch-based ingredients are typically included in the doughs in lesser quantities than the dehydrated potato products.

Consumers are, however, looking for snack products that blend in ingredients beyond the typical starch based materials listed above. For example, consumers would like to have healthier fare in their snack products, for example, snacks based on fruit. But fruit based snack products that are cooked have proven difficult to make in a consumer acceptable format. Fruit, and dehydrated fruit materials typically contain high levels of sugar and moisture. Snacks made from fruit and dehydrated fruit materials tend to burn when cooked and develop off flavors, particularly during frying, baking, extrusion and combination of heat thermal processing. Also, fruit ingredient manufacturers usually pre-treat the initial fruit sources with preservatives such as sulfite dioxide or organic acids such as ascorbic or citric acid. These preservatives promote discoloration of the fruit and increase the browning of the fruit during cooking and other processing steps. Moreover, for natural products and those that claim to be "preservative free", these ingredients are unacceptable.

Another negative effect of high sugar levels in the ingredients is the texture of the finished product upon cooling after cooking. The texture of the snack is a function of the temperature at which the glassy structure is obtained. The higher this glass transition temperature the crispier the texture would be. High sugar containing doughs are sticky and weak with low glass transition temperatures, which are difficult to process (sheeting, cutting, and frying). Ultimately, when these high sugar containing doughs are cooked, the resulting snack is not crisp and often becomes stale quickly.

The addition of dried fruit pieces into the dough in the past has resulted in a product with burnt fruit pieces and off-flavor generation, that is, a bad tasting product with dark/burnt specks. In addition the dough sheets made by using high levels of fruit, which contain high levels of sugars, are stickier and weaker than the dough sheets prepared without fruit ingredients. This is the result of the addition of fruit into the dough, which decreases the glass transition temperature of the dough. This means the snack coming out of the fryer will take longer time to set the structure and become crispy, it will be soft and rubbery sticking to the belts and difficult to transfer. This can be overcome with additional cooling of the sheeter, mill rolls or forming equipment utilized to form the sheet. It may also require additional cooling after frying, baking and the like. However, higher temperature of the snack is desired for the seasoning to stick on the surface and for packing.

US-A-5 132 127 discloses a process for preparing a stable snack food product which comprises: (a) vigorously macerating to a soggy pulp a high moisture fruit material which comprises plant cells and provides a source of flavour and substantially all of the moisture for the snack food product, whereby a substantial proportion of the plant cells are disrupted; (b) blending said soggy pulp with at least one low moisture farinaceous base ingredient to produce a dough comprising from about 25% to about 50% moisture; (c) extruding said dough into a desired shape; and (d) drying said extruded product to about 8% to about 15% moisture. The resulting product can be cooked, baked or fried.

Hence, there exists a need for formulae and processes for making fabricated snack products with relatively high concentrations of fruit and dehydrated fruit materials, while maintaining certain textural qualities that consumers prefer. And there is a need for a dough made from a dehydrated fruit materials that have reduced sugar and moisture content. And there is a need for a fruit containing snack product that is made from a sheet of dough or extruded, and then fried, partially fried and then baked, or baked.

There exists also a need for formulae and processes for making snacks with relatively high fruit levels with lower fat content, but with the texture and taste of full fat snacks.

This and other advantages of the invention will become apparent from the following disclosure.

Summary of the Invention

The present invention provides a dough composition comprising from about 15% to about 40%, by weight of the dough, water and from about 60% to about 85%, by weight of the dough, dry ingredients. The dry ingredients comprise from about 3% to about 50%, by weight of the dry ingredients, dehydrated fruit materials, and from about 20% to about 97%, by weight of the dry ingredients, rice based material. Preferably, the dehydrated fruit material is selected from the group consisting of apple based flour, strawberry based flour, banana based flour, pear based flour, apricot based flour, cranberry based flour, any dry fruit with sugar content less than about 80%, and mixtures thereof. The rice based materials are selected from the group consisting of rice flour, waxy rice starch, waxy rice flour, cross-linked starches.

Preferably the dry blend of ingredients to make the fruit snack has a sugar concentration of less than about 50%, by weight.

the dehydrated fruit materials are dried to a moisture content of less than about 15%, by weight.

In another embodiment of the present invention the dough composition is made into a fabricated snack product that is cooked resulting in a fruit based chip. In yet another embodiment the fabricated snack product is fried in oil resulting in a fruit based chip containing from about 0 grams to about 9 grams of digestible fat per 28 grams of chips, and more preferably less than about 7 grams of fat per 28 grams of chips.

The present invention delivers a fruit based snack that delivers genuine fruit flavor, with a crispy and crunchy texture, and appealing appearance to consumers. Further, the dough and fruit based snacks made therefrom controls off-flavor formation, and eliminates the soggy/soft texture of prior fruit snacks containing high levels of fruit.

Moreover, this invention results in dough sheets that are as strong as potato or corn dough sheets. The dough sheets from this invention are also easy to process and easy to control the quality of the finished product.

The fruit snacks of this invention deliver the desired crispy, consumer preferred, texture comparable to favorite snacks such as potato and tortilla chips. In addition, the fruit snacks of this invention have a higher glass transition temperature than a typical snack containing high level of sugars, and therefore are easily processed without sheeting/forming, cutting, or frying issues.

BRIEF DESCRIPTION OF THE DRAWINGS

While this specification concludes with claims to the present invention which is described in detail herein, it is believed that the invention will be better understood in light of the drawings where;

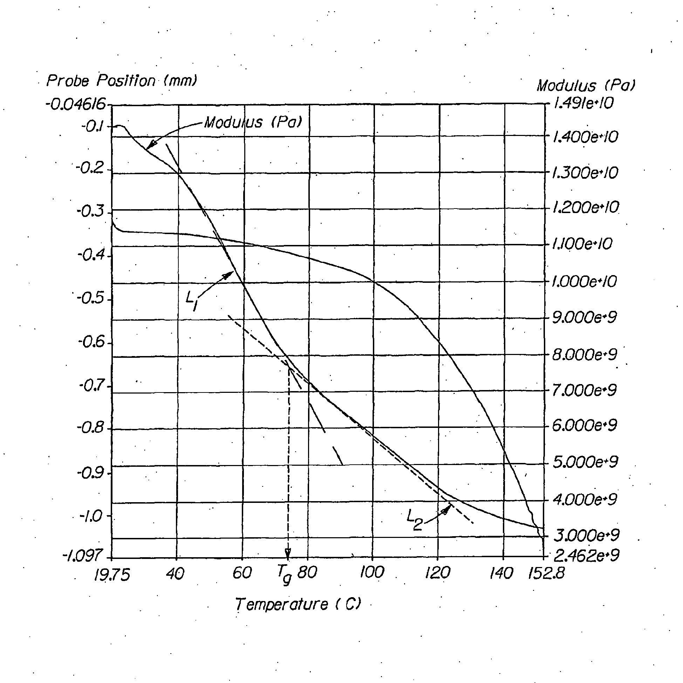

Figure 1 is a graph used of to measure the Fabricated Chip Glass Transition Temperature ($T_g$) for finished fabricated chip samples.

Detailed Description of the Invention

A. DEFINITIONS

As used herein "broken pieces of rice" refers to kernels of rice that are less than three-fourths of the whole kernel.

As used herein "gelatinized" includes any type of gelatinization including fully gelatinized, partially gelatinized, and pregelatinized starches. Gelatinized rice flours can include, but are not limited to, parboil, cooked, partially cooked, and extruded rice flours.

As used herein, "rice" includes any varieties or types of rice including, but not limited to, white, brown, black and wild. "Rice" also includes any rice with any natural or enhanced nutritional content.

As used herein,"extruded rice" refers to rice that has been passed through an extruder.

As used herein "cooked rice" refers to rice that has been parboiled or otherwise cooked or partially cooked before or after grinding into flour.

As used herein "parboiled rice" refers to rice that has gone through a cooking process prior to hull removal.

As used herein "uncooked rice'refers to rice that has not been cooked in any manner.

As used herein "short grain rice" refers to rice that has a short, plump, round-like kernel having a length ranging from about 1 to about 2 times the width, and having a total amylose content ranging from about 0% to about 13%.

As used herein "medium grain rice" refers to rice that has a length ranging from about 2 to about 3 times the width and having an amylose content ranging from about 14% to about 19%.

As used herein "long grain rice" refers to rice that has a long, slender kernel having a length ranging from about 3.5 to about 5 times the width, and having a total amylose content ranging from about 20% to about 25%.

As used herein "dehydrated fruit materials" refers to raw materials or any intermedium source of fruit with a moisture content below 15%. Examples are fruit based flour, fruit based pellets, extruded fruit products, dried fruit pieces, vacuum fried fruit pieces, air puffed fruit containing pieces, and combinations thereof.

As used herein, the term "fabricated" refers to food products made from doughs comprising flour, meal, and/or starch, such as those derived from tubers, grains, legumes, cereals, or mixtures thereof.

As used herein, "native starch" refers to starch that has not been pre-treated or cooked in any way, and includes but is not limited to hybrid starches.

As used herein, "dehydrated potato products" includes, but is not limited to, potato flakes, potato flanules, potato granules, potato agglomerates, any other dehydrated potato material, and mixtures thereof.

As used herein, "sheetable dough" is cohesive dough capable of being placed on a smooth surface and rolled to the desired final thickness without tearing or forming holes. Sheetable dough can also include dough that is capable of being formed into a sheet through an extrusion process.

As used herein, "starch" refers to a native or an unmodified carbohydrate polymer having repeating anhydroglucose units derived from materials such as, but not limited to, wheat, corn, tapioca, sago, rice, potato, oat, barley, and amaranth, and also refers to modified starch including but not limited to hydrolyzed starches such as maltodextrins, high amylose corn maize, high amylopectin corn maize, pure amylose, chemically substituted starches, crosslinked starches, and other modifications including but not limited to chemical, physical, thermal or enzymatic and mixtures thereof. It is understood that the materials described below as "rice starch materials" do not fall within the definition of "Starch" as defined herein.

As used herein, "starch-based flour" refers to high polymeric carbohydrates composed of glucopyranose units, in either natural, dehydrated (e.g., flakes, granules, meal) or flour form. Starch-based flour can include, but is not limited to, potato flour, potato granules, potato flanules, potato flakes, corn flour, masa corn flour, corn grits, corn meal, rice flour, buckwheat flour, oat flour, bean flour, barley flour, tapioca, and mixtures thereof. For example, the starch-based flour can be derived from tubers, legumes, grain, or mixtures thereof.

As used herein the term "added water" refers to water that has been added to the dry dough ingredients. Water that is inherently present in the dry dough ingredients, such as in the case of the sources of flours and starches, is not included in the "added water."

As used herein the term "emulsifier" refers to emulsifier that has been added to the dough ingredients. Emulsifiers that are inherently present in the dough ingredients, such as in the case of the potato flakes (where emulsifier is used as a processing aid during manufacturing), are not included in the term "emulsifier."

As used herein "rapid viscosity unit" (RVU) is an arbitrary unit of viscosity measurement roughly corresponding to centipoise, as measured using the RVA analytical method herein. (12 RVU equal approximately 1 centiPoise)

The terms "fat" and "oil" are used interchangeably herein unless otherwise specified. The terms "fat" or "oil" refer to edible fatty substances in a general sense, including natural or synthetic fats and oils consisting essentially of triglycerides, such as, for example soybean oil, corn oil, cottonseed oil, sunflower oil, palm oil, coconut oil, canola oil, fish oil, lard and tallow, which may have been partially or completely hydrogenated or modified otherwise, as well as non-toxic fatty materials having properties similar to triglycerides, herein referred to as non-digestible fats, which materials may be partially or fully indigestible. Reduced calorie fats and edible non-digestible fats, oils or fat substitutes are also included in the term.

The term "non-digestible fat" refers to those edible fatty materials that are partially or totally indigestible, e.g., polyol fatty acid polyesters, such as OLEAN™. The preferred non-digestible fats are fatty materials having properties similar to triglycerides, such as sucrose polyesters. These preferred non-digestible fats are described in U.S. Patent No. 5,085,884, issued February 4, 1992 to Young et al. and U.S. Patent No. 5,422,131, issued June 6, 1995 to Elsen et al. An especially preferred brand of non-digestible fats is sold under the trade name OLEAN™.

By the term "dry blend" it is meant herein the dry raw material mixed together prior to processing of the materials so mixed.

All percentages are by weight unless otherwise specified.

All documents cited herein are, in relevant part, incorporated by reference; the citation of any document is not to be construed as an admission that it is prior art with respect to the present invention.


B. DEHYDRATED FRUIT MATERIALS

To produce the consumer preferred, fruit based snacks of this invention the dehydrated fruit materials should have a sugar concentration of from 15% to less than 50%, by weight. Moreover, the dehydrated fruit materials should be mixed with at least about 20%, by weight of the dry ingredients, rice based materials as defined below. the dehydrated fruit materials are dried to a moisture content no higher than 15%. Also, the fruit can be ground to a specific particle size distribution (from flour to agglomerates, pieces, extrudates and co-extrudates). The level of dehydrated fruit materials in the formula varies from about 3% to about 50%, preferably from about 8% to about 40% and more preferably from about 10% to about 35%, by weight of the dry ingredients, depending on the sugar content of the material.

The dehydrated fruit materials are preferably selected from the group consisting of apple based flour, strawberry based flour, banana based flour, pear based flour, apricot based flour, cranberry based flour, any dry fruit (for example, apples, pears, bananas, apricots, cranberries, strawberries and the like) with sugar content less than about 80%, and mixtures thereof.. The dehydrated fruit materials can be supplement or flavored with natural or artificial flavors, juices, purees, and the like. Other dehydrated fruit materials are appropriate for use herein as described above. Examples of suitable fruit based flours, their source and exemplary properties are given in Tables B1 and B2 below

TABLE B1

| Material | Supplier | Location |
|---|---|---|
| Apple Powder low $SO_2$ | Surfrut | Santiago, Chile |
| Apple Powder | FDP USA, Inc. | Santa Rosa, CA. |
| Apple Powder | Agrocepia | Talca, Chile |
| Apple Powder without skin | Agrocepia | Talca, Chile |
| Fruit sensations (fruit flavored intermediate moisture apple dices) | Treetop | Selah, WA |
| Diced apple | Agrocepia | Talca, Chile |
| Apple Powder (sample treated with ascorbic acid) | Agrocepia | Talca, Chile |
| Apple powder chop (with skin) | Treetop | Selah, WA |
| Apple powder | Treetop | Selah, WA |
| Banana Flakes | Confoco | Ecuador |
| Banana powder | Confoco | Ecuador |
| Strawberry flour | Mercer | Carmel, CA |

TABLE B2

| Proximate Analysis* (%) | Strawberry Flour Mercer Processing, Inc. Modesto, CA. | Apple Flour Treetop, Selah, WA. |
|---|---|---|
| Water * | 3 | 2.8 |
| Sugars * | 41.3 | 69.2 |
| Protein * | 7.1 | 2.0 |
| Total Fat * | 4.3 | 0.3 |
| Total Carbohydrates | 80.7 | 92.0 |
| Dietary Fiber * | 6.1 | 6.2 |
| | | |
| Potassium (mg) * | 1,642.5 | 620 |
| Calcium (mg) * | 177.6 | 34 |
| | | |
| Vitamin C (mg) * | 457.2 | 11.3 |
| Vitamin A (IU) * | 499.4 | 101.0 |
| | | |
| Particle Size Distribution | 90% through mesh #20 | 90% through mesh #20 |
| * Information provided by suppliers | | |

The sugar content as well as the type of sugar molecular weight distribution of a dried fruit material varies based on its source, as shown in Table B2 above. The apple flour exemplified in Table B2 contains 70% sugar which makes it difficult to use this flour alone in the compositions of the present invention. It is preferred; that when a fruit based flour, such as the apple flour in Table B2, with high sugar content is used that it be blended with a fruit based flour having a lower sugar concentration. For example, the strawberry flour of Table B2, which contains only about 40%, by weight, sugar, can be combined with the apple flour to produce a blend having less than about 50% sugar by weight. By blending various flours and other dehydrated fruit materials that have different sugar concentrations, those skilled in the art will easily be able to achieve a sugar concentration of less than about 50%, preferably from about 15% to about 40%, by weight.

While not wanting to be bound by any one theory, it is believed that the high sugar levels contained in certain dehydrated fruit materials lowers the glass transition temperature (Tg) of a formulated snack product, which means that the product will not develop a hard texture until it is cooled down. In addition, the dough sheets made with high sugar content dry fruit materials are sticky and weak. Blending different flours as described above is one way to manipulate the naturally occurring concentration of sugar in dehydrated fruit materials.

Dehydrated fruit materials provide many benefits and can contain added nutrients such as vitamins, calcium, antioxidants, fiber, etc. These supplements can be added by subjecting the fruit source to pre-treatment before processing or they can be added to the finished product via the seasoning. Additionally, the fruit source can contain added flavors either infused in the fruit or mixed with the fruit. To produce the dehydrated fruit materials used in the compositions of the fruit sources can be extruded to form an extrudate with intermedium moisture content. As discussed above, regardless of how the fruit based flour is formed, it should be dried to a moisture content of less than about 15%, preferably less than about 12%, and more preferably less than about 10%, by weight.

To maximize the benefits of adding dehydrated fruit materials to the fabricated snacks of the present invention, it is preferred that a rice based material, as defined directly below, be included in the dough. The rice based material, which is preferably extruded or precooked, along with optional starches, aid in the expansion of the final snack chip.

## C. RICE BASED MATERIALS

As discussed above, to maximize the benefits of the dehydrated fruit materials, the dough of the present invention should include from about 20%, to about 95%, preferably, from about 30% to about 85%, more preferably from about 35% to about 80%, by weight of the dry ingredients, rice based materials. The rice based material helps to create the authentic fruit flavor of the fruit snack of the present invention. Moreover, the rice flour dilutes the level of sugar in the formula and provides a neutral and clean flavor allowing the fruit flavor to come through easier. Rice has a naturally bland flavor that does not mask the fruit flavor like corn or potato flours will.

It is preferred that the rice based material be precooked rice flour to provide a white base with no flavor to compete with the fruit. This material should be highly cooked to avoid raw flavors, overexpansion in the texture, and minimize cooking time upon mixing with the fruit based materials.

The rice based materials are selected from the group consisting of rice flour, waxy rice starch or flour, acetylated rice starch, cross linked rice starch and mixtures thereof. The rice flour is preferably selected from the group consisting of medium grain rice flour, long grain rice flour, and mixtures thereof. The rice based material can also consist of coextrudates of rice with: grains (e.g. corn, wheat, barley and the like); fruit; and vegetables (e.g. carrots, tomatoes, peppers, and the like)

The rice based materials serve also as processing and formulation additives that provide a better dough, resulting in a superior sheeted product from which the fabricated snack piece can be made. And importantly, a chip product made by frying the fabricated snack piece has superior attributes.

The rice based materials include, but are not limited to, conventional rice flour, pregelatinized starches, low viscosity starches (e.g., dextrins, acid-modified starches, oxidized starches, enzyme modified starches), stabilized starches (e.g., starch esters, starch ethers), waxy rice starch or flour, cross-linked starches, acetylated starches, starch sugars (e.g. glucose syrup, dextrose, isoglucose) and starches that have received a combination of treatments (e.g., crosslinking and gelatinization) and mixtures thereof. Those skilled in the art will appreciate that the rice starch materials described herein are commercially available, for example, from Remy Industries N.V., Remylaan 4, B-3018 Leuven-Wijgmaal, Belgium. The conventional rice flour includes long grain, medium grain, short grain and sweet or grain rice can all be made into rice flour. In addition, rice flour can be made from broken pieces or whole pieces of rice. Rice flours made from these different types of rice vary in water absorption index, peak viscosity, final viscosity, and total amylose content. Furthermore, if the rice is partially or fully pre-cooked, parboiled, or pre-gelatinized in any other way prior to, or after, processing into rice flour, the rice flour properties can be further modified.

In a preferred embodiment, the composition comprises long grain rice flour, medium grain rice flour, or combinations thereof. Furthermore, the composition can comprise rice flour that is partially or fully gelatinized. For example, the rice flour can be gelatinized, partially gelatinized, partially pre-cooked, pre-cooked, par-boiled, extruded, or combinations thereof in order to effect the desired starch degradation in the rice Hour.

Mixing together the desired quantities of various rice flours can be used to make the desired rice based materials. This can be accomplished by any suitable means such as, but not limited to, mixing the rice grains before milling, or mixing the flours together after milling.

In a preferred embodiment, gelatinized rice flour is used. In this embodiment, the composition can comprise a blend of one or more rice flours that have been gelatinized to varying degrees. For example, the gelatinized rice four can comprise fully cooked rice, partially cooked rice, parboiled rice, extruded rice, or mixtures thereof. The fully cooked gelatinized rice flour is from about 75% to about 100% gelatinized, the partially cooked rice flour and the extruded rice flour is from about 25% to about 100% gelatinized, and the parboiled rice flour is from about 75% to about 100% gelatinized.

Extrusion is the preferred method of processing the gelatinized rice flour for this invention. Extrusion provides the cooking conditions required for the starch of the rice flour to completely cook, resulting in complete gelatinization and high levels of dextrinization of the starch--i.e., starch degradation. The use of extrusion to prepare the rice flours for this invention guarantees the absence of a raw starch taste or the powdery starchy aftertaste and the uncontrolled and excessive expansion in the finished product.

In one embodiment, the gelatinized rice flour is selected from the group consisting of partially precooked long grain rice flour, fully cooked long grain rice flour, fully cooked medium grain rice flour, parboiled rice flour, and mixtures thereof. In another embodiment, the gelatinized rice flour is made from gelatinized broken, long grain rice pieces.

Optionally, an emulsifier can be added to the rice based material as a processing aide to complex the free amylose generated during cooking and/or milling. For example, monoglycerides can be added at a level ranging from about 0.2 to about 0.7%, and preferably from about 0.3% to about 0.5% (on a dry solids basis).

The rice based materials can be ground to a wide range of particle size distribution. In a particular embodiment, the composition has a particle size distribution such that about 35% of the rice based materials remains on a US #100 mesh. In another preferred embodiment, the rice based materials have a particle size distribution wherein from about 5% to about 30% remains on a 60 mesh screen, from about 15% to about 50% remains on a 100 mesh screen, and from about 20% to about 60% remains on a 200 mesh screen. Particle size distribution of the rice based materials is important to ensure proper hydration during mixing. Also, the particle size distribution has an effect on texture; large particles in the rice based materials will contribute to slow melting and tooth packing.

D. FABRICATED SNACK PRODUCT PREPARATION

Although the use of the dehydrated fruit materials in combination with the rice based materials will be described primarily in terms of a preferred fabricated snack product, it should be readily apparent to one skilled in the art that the dough formed with these compositions can be used in the production of any suitable food products. For instance, the dough can be used to produce food products such as extruded products, breads, sauces, crackers, fried snacks, fruit and vegetable snacks, baked or dried snacks, coatings for fried foods, baby foods, dog foods, dog biscuits and any other suitable food product. The production of the preferred fabricated snack product is set forth in detail below.

1. DOUGH FORMULATION

The preferred doughs of the present invention comprise a dry blend and added water. Preferably, the doughs comprise from about 60% to about 85% dry blend and from about 15% to about 40% added water. Preferably the added water is between about 15% and 35%, and even more preferably between about 15% and about 30%, by weight of the dough. The dough can further comprise optional ingredients, including those that decrease the moisture content of the dough. For example, to lower the moisture content in the dough, the following ingredients can be added: 1) hydrolyzed starches into the dough, such as maltodextrins with low dextrose equivalent values; 2) polysaccharides such as Xanthenes, hydroxypropyl cellulose, and combinations; and 3) emulsifiers.

a. DRY BLEND

Preferred doughs comprise from about 60% to about 85% dry blend, preferably from about 65% to about 75% dry blend. Preferably the dry blend has a particle size distribution wherein from about 5% to about 30% remains on a 60 mesh screen, from about 15% to about 50% remains on a 100 mesh screen, and from about 20% to about 60% remains on a 200 mesh screen.

The dry blend comprises the dehydrated fruit materials arid the rice based materials. Preferred dry blends comprise from about from about 3% to about 50%, by weight of the dry ingredients, dehydrated fruit materials; and from about 20% to about 97%, by weight of the dry ingredients, rice based material. Other starch materials may be added, for example, tapioca, oat, wheat, rye, barley, corn, masa, cassava, non-masa corn, peanut, dehydrated potato products (e.g., dehydrated potato flakes, potato granules, potato flanules, mashed potato materials, and dried potato products), as well as leguminoses, such as beans, chickpeas, and combinations of thereof. These other starch materials can be blended to make snacks of different compositions, textures, and flavors. Furthermore, the balance of the dry blend can comprise one or more other components including but not limited to, protein sources, fiber, minerals, vitamins, colorants, flavors, fruits pieces, vegetables, seeds, herbs, spices, and mixtures thereof. It is sometimes beneficial to coat these other components before they are added to the dry blend.

b. ADDED WATER

Preferred dough compositions of the present invention comprise from about 15% to about 40% added water, preferably from about 15% to about 35%, and more preferably from about 15% to about 30% added water. If optional ingredients, such as maltodextrin or corn syrup solids, juices, concentrates, are added as a solution, the water in the solution is included as added water. The amount of added water also includes any water used to dissolve or disperse ingredients.

c. OPTIONAL INGREDIENTS

Any suitable optional ingredient may be added to the doughs of the present invention. Such optional ingredients can include, but are not limited to polysaccharides such as: gums and fibers, emulsifiers, and mixtures thereof. Optional ingredients are preferably included at a level ranging from about 0% to about 50%, preferably, 0% to about 40%, by weight in the dough. Examples of suitable gums can be found in U.S. Patent No. 6,558,730, issued May 6, 2003, to Gizaw et al. Optional ingredients include, but are not limited to, vegetables (e.g. tomatoes, carrots, peppers, and the like) and legume sources (e.g. pinto beans, garbanzo beans, green peas, and the like).

An ingredient that can optionally be added to the dough to aid in its processability is one or more emulsifiers. The addition of an emulsifier to the dough reduces the stickiness of the dough which minimizes sticking to the sheeting rolls, belts, and the like. Emulsifiers also have an effect on the texture of the final product, wherein higher levels of emulsifier result in denser finished products. An emulsifier is preferably added to the dough composition prior to sheeting the dough. The emulsifier can be dissolved in a fat or in a polyol fatty acid polyester such as Olean™. Suitable emulsifiers include lecithin, mono- and diglycerides, diacetyl tartaric acid esters and propylene glycol mono- and diesters and polyglcerol esters. Polyglycerol emulsifiers such as monoesters of hexaglycerols, can be used. Particularly preferred monoglycerides are sold under the trade names of Dimodan available form Danisco®, New Century, Kansas and DMG 70, available from Archer Daniels Midlands Company, Decatur, Illinois.

When calculating the level of optional ingredients according to the present invention, that level of optional ingredient which may be inherent in the dehydrated fruit materials and rice based material is not included.

2. DOUGH PREPARATION

The doughs of the present invention can be prepared by any suitable method for forming sheetable doughs. Typically, a loose, dry dough is prepared by thoroughly mixing together the ingredients using conventional mixers. Preferably, a pre-blend of the wet ingredients and a pre-blend of the dry ingredients are prepared; the wet pre-blend and the dry pre-blend are then mixed together to form the dough. Hobart® mixers are preferred for batch operations and Turbulizer® mixers are preferred for continuous mixing operations. Alternatively, extruders can be used to mix the dough and to form sheets or shaped pieces.

a. SHEETING

Once prepared, the dough is then formed into a relatively flat, thin sheet. Any method suitable for forming such sheets from starch-based doughs can be used. For example, the sheet can be rolled out between two counter rotating cylindrical rollers to obtain a uniform, relatively thin sheet of dough material. Any conventional sheeting, milling and gauging equipment can be used. The mill rolls should preferably be cooled to from about 5°C to about 45°C. In a preferred embodiment, the mill rolls are kept at two different temperatures, with the front roller being hotter than the back roller. The dough can also be formed into a sheet by extrusion.

Doughs of the present invention are usually formed into a sheet having a thickness ranging from about 0.015 to about 0.10 inches (from about 0.038 to about 0.25 cm), and preferably to a thickness ranging from about 0.019 to about 0.05 inches (from about 0.048 to about 0.127 cm), and most preferably from about 0.02 inches to about 0.03 inches (0.051 to 0.076 cm).

Dough sheets of the present invention have a sheet strength of from about 80 gf to about 400 gf, preferably from about 85 gf to about 300 gf, and more preferably from about 95 gf to about 150 gf. Moreover, the dough of the present invention is strong even when sheeted to very low thickness and high levels of dehydrated fruit materials. The sheet strength increases as the level of dehydrated fruit materials decreases. The rice ingredients enable the incorporation of dehydrated fruit materials into the formulation of snacks due to the rice's ability to increase sheet strength, the present rice flour composition is an excellent carrier for food pieces in the dough, for example, pieces of fruit, vegetables, whole grains, nuts and the like. However, masa, oat flour, are also good options as starch containing materials for fruit containing snacks.

The dough sheet is then formed into snack pieces of a predetermined size and shape. The snack pieces can be formed using any suitable stamping or cutting equipment. The snack pieces can be formed into a variety of shapes. For example, the snack pieces can be in the shape of ovals, squares, circles, a bowtie, a star wheel, or a pin wheel. The pieces can be scored to make rippled chips as described by Dawes et al. in PCT Application No. PCT/US95/07610, published January 25, 1996 as WO 96/01572.

b. COOKING

After the snack pieces are formed, they are cooked until crisp to form fabricated snack products. The snack pieces can be fried, for example, in a fat composition comprising digestible fat, non-digestible fat, or mixtures thereof. For best results, clean frying oil should be used. The free fatty acid content of the oil should preferably be maintained at less than about 1%, more preferably less than about 0.3%, in order to reduce the oil oxidation rate. Any other method of cooking or drying the dough, such as high temperature extrusion, baking, vacuum drying, microwave heating, and mixtures of these is also acceptable. Preferably, the fabricated snack product is cooked to form a fruit based chip having a chip fracture strength from about 75 to about 500 gf, preferably from about 180 to about 280 gf, and most preferably from about 200 to about 300 gf. And it is also preferred that when the fabricated snack product of the present invention is fried in oil, the resulting fruit based chip has a density of from about 0.6 to 1.6 g/ml, preferably from 0.7 to 1.2, and more preferably from 0.8 to 1.0 g/ml.

The flavor and texture of the fruit based snack of this invention are the result of making them from a dough sheet that is relatively thin, preferably only 0.018 - 0.055 inches (0.046cm to 0.14cm) and formulated with low levels of moisture in the dough as described above. This low level of water and the presence of the rice based materials in the formula, allows the frying time to be substantially reduced to achieve the desirable texture. That is, because the dehydrated fruit materials are dried, the rice is already cooked, and the starches gelatinized at low temperature, the frying energy required is minimum, and there is lower fat adsorption during the abbreviated cooking process. Also, because of the low level of water used in the dough making process, the level of fat content of the chip will be lower than a typical fried snack. The fruit snack from this invention has a range in total fat content from 10 to 29%, Preferably from 15 to 25%.

In one embodiment of this invention the dough is made into a fabricated snack product that is dried using microwave heating and then fried to a density from about 0.6 to about 1.8 g/ml.

In a preferred embodiment of the present invention, the frying oil has less than about 30% saturated fat, preferably less than about 25%, and most preferably, less than about 20%. This type of oil improves the lubricity of the finished fabricated snack products such that the finished fabricated snack products have an enhanced flavor display. The flavor profile of these oils also enhance the flavor profile of topically seasoned products because of the oils' lower melting point. Examples of such oils include sunflower oil containing medium to high levels of oleic acid.

In another embodiment of the present invention, the snack pieces are fried in a blend of non-digestible fat and digestible fat. Preferably, the blend comprises from about 20% to about 90% non-digestible fat and from about 10% to about 80% digestible fat, more preferably from about 50% to about 90% non-digestible fat and from about 10% to about 50% digestible fat, and still more preferably from about 70% to about 85% non-digestible fat and from about 15% to about 30% digestible fat. Other ingredients known in the art can also be added to the edible fats and oils; including antioxidants such as TBHQ, tocopherols, ascorbic acid, chelating agents such as citric acid, and anti-foaming agents such as dimethylpolysiloxane.

In another embodiment of the present invention, the fabricated chip products are fried in oils with low levels of saturated fat, such as high oleic sunflower oil, corn oil, rice oil, mid oleic sunflower oil, palm oil and mixtures thereof.

It is preferred to fry the snack pieces at temperatures of from about 275°F (135°C) to about 420°F (215°C), preferably from about 300°F (149°C) to about 410°F (210°C), and more preferably from about 350°F (177°C) to about 400°F (204°C) for a time sufficient to form a product having about 6% or less moisture, preferably from about 0.5% to about 4%, and more preferably from about 1% to about 3% moisture. The exact frying time is controlled by the temperature of the frying fat and the starting water content of the dough, which can be easily determined by one skilled in the art.

Preferably, the snack pieces are fried in oil using a continuous frying method and are constrained during frying. This constrained frying method and apparatus is described in U.S. Patent No. 3,626,466 issued December 7, 1971 to Liepa. The shaped, constrained snack pieces are passed through the frying medium until they are fried to a crisp state with a final moisture content of from about 0.5% to about 4%, preferably from about 1% to about 2.5%.

Any other method of frying, such as continuous frying or batch frying of the snack pieces in a non-constrained mode, is also acceptable: For example, the snack pieces can be immersed in the frying fat on a moving belt or basket. Likewise, frying can occur in a semi-constrained process. For example, the fabricated snack pieces can be held between two belts while being fried in oil.

Oils with characteristic flavor or highly unsaturated oils can be sprayed, tumbled or otherwise applied onto the fabricated snack products after frying. Preferably triglyceride oils and non-digestible fats are used as a carrier to disperse flavors and are added topically to the fabricated snack products. These include, but are not limited to, butter flavored oils, natural or artificial flavored oils, herb oils, and oils with potato, garlic, or onion flavors added. This allows the introduction of a variety of flavors without having the flavor undergo browning reactions during the frying. This method can be used to introduce oils which would ordinarily undergo polymerization or oxidation during the heating necessary to fry the snacks.

The finished products from this invention have unique naturally sweet flavor and crispier texture than typical potato snacks due to the dehydrated fruit materials added into the formula. The rice flour is responsible for creating a light texture with a controlled expansion, which means a chip surface without the presence of external bubbles and only with small and internal bubbles. These internal bubbles decrease the density of the chip compared to potato crisps. The fat content of the finished chip of this invention ranges from about 0 grams to about 9 grams per a 28 gram serving of chips. Preferably the fat content of the chip is less than about 7g of fat per a 28 gram serving of chips This represents approximately 20 to 50% reduction in the fat content when compared to a chip processed under similar conditions but comprising potato flour, which is typically of 11g per 28 g serving.

D. PRODUCT CHARACTERISTICS AND ANALYTICAL METHODS

1. CHIP DENSITY TEST PROCEDURE

The density of snacks can be related to the texture and eating quality of the snacks. The lower the density of the product the lighter.texture and eating quality the product is. Low density products, such as extruded snacks, can have a slow melting eating quality and some level of tooth-packing. Products like potato and tortilla snacks have a high density, with the characteristic crunchy texture and fast melting eating quality. The fruit based products of this invention have a density similar to potato, and tortilla snacks, with a faster melt down (as shown by the low water absorption index). The products of this invention have a unique crispiness and eating quality that delivers the desired attributes from tortilla or potato snacks, and a sustained crunch and uniquely sweet flavor. The products of this invention also have a more lubricious eating quality compared to typical extruded snacks made with low levels of fruits. Products of this invention ranged from 0.6 to 1.6 g/cc, preferably from about 0.7 to 1.2 g/cc, more preferably, from 0.8 to 1.0. The density can be measured by the following methods.

Density Measurement

Equipment

1. Graduated cylinder having an open end that is sufficiently large to accommodate unbroken snack pieces.
2. Balance
2. Glycerin (P&G Chemicals, Cincinnati, OH).

Procedure

1. Tare the graduated cylinder
2. Fill the graduated cylinder to the upper most graduation mark with glycerin. Insure that the filled graduated cylinder does not contain air bubbles.
3. Weigh the glycerin filled graduated cylinder and record the mass of the glycerin filled graduated cylinder to the nearest one hundredth of a gram. This is the mass of glycerin in the graduated cylinder = $m_{Glycerin}$
4. Empty the glycerin from graduated cylinder and clean the emptied graduated cylinder.
5. Tare the clean graduated cylinder from Step 4 above.
6. Place approximately 20 grams of unbroken test product in the graduated cylinder.
7. Weigh the graduated cylinder containing the test product and record the mass of the graduated cylinder containing the test product to the nearest one hundredth of a gram. This is the mass of the test product in the graduated cylinder = $m_{test\ product}$
8. Fill the graduated cylinder containing the test product to the upper most graduation mark with glycerin. Insure that the filled graduated cylinder does not contain air bubbles.
9. Within 5 minutes of performing Step 8 above, weigh the graduated cylinder containing the test product and glycerin and record the mass of the graduated cylinder containing the test product and glycerin to the nearest one hundredth of a gram. This is the mass of the test product and glycerin in the graduated cylinder = $m_{test\ product\ +\ glycerin}$
10. Empty and clean the graduated cylinder from Step 9
11. Repeat Steps 1 through 10 above, using fresh glycerin and test product, two additional times to obtain a total of three measurements per sample.
12. Average the three sample measurements to yield :

- average $m_{1\ glycerin}$

- average m $_{test\ product}$
- average m $_{test\ product\ +\ glycerin}$

Calculations

$$\rho_{glycerin} = 1.2613\ gm/mL\ at\ 20°C \quad \text{(Density of glycerin, literature value)}$$

$$average\ V_{1\ glycerin} = (average\ m_{1\ glycerin})\ /\ (\rho_{glycerin}) = volume\ of\ the\ cylinder$$

$$average\ m_{2\ glycerin} = average\ m_{test\ product\ +\ glycerin} - average\ m_{test\ product}$$

$$average\ V_{2\ glycerin} = (average\ m_{2\ glycerin})\ /\ (\rho_{glycerin})$$

$$average\ V_{test\ product} = average\ V_{1\ glycerin} - average\ V_{2\ glycerin}$$

$$SV_{test\ product} = (average\ V_{test\ product})\ /\ (average\ m_{test\ product})$$

$$\rho_{test\ product} = 1\ /\ SV_{test\ product}$$

## 2. % FAT ANALYSIS

The percent of total fat in a chip can be measured by standard procedures known to those in the food arts, preferably, the total fat is measured by acid hydrolysis. Specifically, the method for measuring total fat by acid hydrolysis can be found in AOAC International (2000) 17th edition AOAC International, Gaithersburg, MD, USA, Official Methods 922.06, 954.02.

## 3. CHIP FRACTURE STRENGTH

Fracture Strength is the measurement of the force required to break a chip. The fracture strength relates to the strength of the snack, and the eating quality. The higher the fracture strength, the higher the crunchiness and crispiness of the chip. The snacks of this invention show high values of fracture strength, with a crunchy texture and lower fat content. The products of this invention have chip fracture strength higher than potato snack products. The fruit containing product of the present invention have a chip fracture strength (grams force) from 75 gf to 500 gf, preferably from 180 to 280 gf, and most preferably from 200 to 300 gf.

Fracture strength can be measured by the following method.

Equipment

TA-XT2i Texture Analyzer from Texture Technologies; Scarsdale, New York, equipped with a 5 kg load cell.

Method

1. Probe and force calibrations are completed each day prior to analysis.
2. The sample is placed on the adjustable three point bend/snap fixture, with a gap of 20.30 nun, measured with electronic calipers, with the curve side facing downward. A knife blade with a flat 3mm end is used to fracture the samples (TA-43, Texture Technologies).

3. The following settings are used:

    a. Measure force in compression
    b. Pre-test speed: 1.5 mm/s
    c. Test-speed: 0.5 mm/s
    d. Post-test speed: 10.0 mm/s
    e. Distance: 5.0 mm
    f. Trigger force: 5.0 g

4. Only chips free of cracks and breakage are analyzed. The chips are stored in sealed containers until analysis.
5. The following macro was used to analysis the data:

    a. Clear graph results
    b. Redraw
    c. Search forward
    d. Go to minimum time
    e. Go to absolute positive value (force)
    f. Mark value force (hardness), record value
    g. Mark value distance (fracturability), record value

6. An average of fifteen runs is used for the fracture strength.

4. SHEET STRENGTH TEST

The tensile test is a mechanical stress-strain test measuring the tensile strength of a dough sheet. A dough strip is mounted by its ends onto the testing machine. The dough strip is elongated at a constant rate until the strip breaks. The force (g) at which the strip breaks is the tensile strength of the dough. The output of the tensile test is recorded as force/load versus distance/time. The sheet strength can be measured by the following method.

Equipment

3. Stable Micro Systems Texture Analyzer TA-XT2 or TA-XT2i with 25 kg load cell capacity with Texture Expert Exceed Software and a 5 kg calibration weight.
4. Instron Elastomeric Grips (Catalog # 2713-001), having the following replacement parts:

    a.) Internal springs (Instron Part No. 66-1-50) replaced with springs made from 0.5842 mm diameter wire. The replacement springs must be 3.81 cm long, have an inside diameter of 0.635 cm, and a K factor of 0.228 N/mm. Said replacement Springs can be obtained from the Jones Spring Company of Wilder, Kentucky U.S.A.; and
    b.) Instron Part No. T2-322 is replaced, as shown in Figures 8 and 9, by a modified roller plain. Said modified roller plain is an Instron Stock Part No. T2-322 that has been machined to have a flat side 4.412 cm long and 0.9525 cm wide on said roller plain's outer surface. Said flat side is covered with Armstrong Self-adhereing Tape # Tap18230 and is positioned parallel to the sample side of the Grip's Clamp Frame Lower (Instron Part No. A2-1030). The Instron Elastomeric Grips are fixed on the top and bottom of the Texture Analyzer.

Sample Preparation

1. Collect a dough sheet having a uniform thickness ranging from 0.38 mm to 2.50 mm, and a length of at least 20 cm.

2. Cut samples from the dough sheet to form dough strips that are 2.5 cm wide and 15 cm long. The strips' 15 cm length should correspond to the dough's machine direction. Cut all of the strips sequentially.

3. Protect the samples from moisture loss by placing the samples in an air-tight container. The samples must be analyzed within 10 minutes of collection to ensure that the samples are analyzed fresh.

Texture Analyzer Settings

| Test Mode: | Measure Force in Tension |
| --- | --- |
| Option: | Return to Start |
| Pre-test speed: | 3.0 mm/s |
| Test speed: | 10 mm/s |
| Post test speed: | 10 mm/s |
| Distance: | 45 mm |
| Trigger Type: | Auto |
| Trigger Force: | 5 g |
| Units: | grams |
| Distance: | millimeters |
| Break Detect: | Off |

Data Analysis

The sheet tensile strength for a sample is the maximum force before a sample breaks. A dough's sheet tensile strength is the average of five sample sheet strengths.

5. GLASS TRANSITION TEMPERATURE MEASUREMENTS FOR FABRICATED CHIP

Glass Transition Temperatures Tg, $Tg_1$ and $Tg_2$ measurements are performed using a Perkin Elmer Dynamic Mechanical Analyzer DMA-7e. The average of 5 sample Tg values is considered to be the respective Tg value for a tested finished product..

Fabricated Chip Glass Transition Temperature ($T_g$)

For finished fabricated chip samples, a 3-point bending configuration, having a 15 mm bending platform (Perkin Elmer Part No. N539-0197) and a 5 mm knife edge probe tip (Perkin Elmer Part No. N539-1063), is used. A center portion of a test chip, having an $A_w$ of 0.3 $\pm$ 0.05, is cut out to form a chip portion that is from 16 mm to 18 mm long and from 5 mm to 10 mm wide. Said chip portion is then placed in the 3-point bending configuration such that the chip portion bridges the 15 mm bending platform of the 3-point bending configuration without touching the walls of the sample tube, and does not rock when the probe initially contacts said chip portion. Then, a 100 mN static force and a 85 mN dynamic force, at 1 Hz frequency, are applied to the chip portion. The test temperature is ramped from 0°C to 160°C at 5°C/min. As shown in Figure 1, the storage modulus (E') is plotted against temperature, and probe position is plotted against temperature. For a test to be valid, any value for probe position, except the initial value of probe position, in the plot of probe position versus temperature, cannot be greater than 101% of any preceding value for probe position. Also, the probe must not break the sample during the test.

Procedure For Determining (Tg) and For A Test Sample

1. Draw the best fit line through the points on the plot of E vs temperature that correspond to the temperature range of 40° C to 60° C and designate this line as $L_1$.
2. Draw a best fit line through the points on the plot of E vs temperature that correspond to the transition region between the glassy phase and the rubbery plateau. Designate this line as $L_2$.
3. For a test sample, Tg is considered to be the temperature that corresponds to the intersection point of $L_1$ and $L_2$.

6. WATER ACTIVITY (Aw)

The water activity is defined as the ratio $A_w = p/p_o$, where p represents the actual partial pressure of water vapor and $p_o$ the maximum possible water vapor pressure of pure water (saturation pressure) at the same temperature. The $A_w$ level is therefore dimensionless; pure water has a level of 1.0, and a completely water-free substance has a level of 0.0. The relationship between the equilibrium relative humidity %RH in a food and the water activity is $A_w$x100 = %RH.

Instrument

Rotronic Hygromer® AwVc with an operational temperature range from 0°C to 100°C, and 0 % to 100 % RH.

Method

1. Weigh approximately 5 grams of sample and transfer it into a plastic bag.
2. Break the sample into small pieces with a flat object.
3. Place the sample in a small plastic Rotronic dish and then place the dish in the bottom half of the measuring station.
4. Begin the test cycle - an $A_w$ reading is taken when the test cycle is complete. The resulting $A_w$ value is considered to be the $A_w$ value for the chip.

The $T_g$ of this Applicants' fabricated chip embodiments (equilibrated at an Aw of about 0.30 @ 20°C) are more fully detailed below.

Embodiments of Applicants' fabricated chips have a Tg greater than about 40°C. Other embodiments of Applicants' fabricated chips have a Tg from about 45°C to about 80°C. Still other embodiments of Applicants' fabricated chips have a Tg from about 50°C to about 80°C.

7. WATER ABSORPTION INDEX (WAI)

Finished Product:

In general, the terms "Water Absorption Index" and "WAI" refer to the water-holding capacity of a carbohydrate based material. (See e.g. R.A. Anderson et al., Gelatinization of Corn Grits By Roll-and Extrusion-Cooking, 14(1):4 CEREAL SCIENCE TODAY (1969).)

The WAI for a sample is determined as follows:

1. Weigh an empty centrifuge tube to two decimal places.
2. Place two grams of ground sample into the tube.
3. Add thirty milliliters of water, having a temperature of 30°C, to the tube.
4. Stir the combined water and sample vigorously so that no dry lumps remain.
5. Place the tube in a water bath, having a temperature of 30°C, for 30 minutes. Stir the combined water and sample vigorously at the 10 minute, 20 minute and 30 minute marks.
6. Centrifuge the combined water and sample in a Centra® MP4 centrifuge, supplied by International equipment Company of Needham Heights, MA U.S.A., for 15 minutes at 3,000 rpm.
7. Decant the water from the tube, leaving a gel behind.
8. Weigh the tube and its contents.
9. The WAI is calculated by dividing the weight of the resulting gel by the weight of the dry sample:

$$WAI = (\ [\text{weight of tube and gel}] - [\text{weight of tube}]\ ) \div [\text{weight of dry sample}]\ )$$

E. EXAMPLES

Particular embodiments of the present invention are illustrated by the following non-limiting examples.

Table E1 gives three exemplary compositions wherein a dry blend is prepared and then made into a dough. The dough is sheeted, cut into fabricated snack pieces and fried to make a fruit based snack chip according to the present invention. Certain properties of the dough, sheet and resulting snack chip are also given in Table E1.

## TABLE E1

## EXAMPLES 1 - 3

| Ingredients | Example 1 | | Example 2 | | Example 3 | |
|---|---|---|---|---|---|---|
| | % Dry Blend | % Dough | % Dry Blend | % Dough | % Dry Blend | % Dough |
| White Rice Flour, GL 1080, Sage V, Huston, TX. | 33.5 | 24.6 | 43.5 | 32.84 | 53.5 | 38.25 |
| Waxy Rice Flour, Remyflow S 200, Remy, | 9.4 | 6.91 | 9.4 | 7.1 | 9.4 | 6.72 |

| Wheat Starch, Midsol 50, MGP | 9.4 | 6.91 | 9.4 | 7.1 | 9.4 | 6.72 |
|---|---|---|---|---|---|---|
| Apple Powder, Low Moisture 20 mesh, Treetop | 17 | 12.5 | 12.0 | 9.06 | 7 | 5.01 |
| Pregel Yellow Corn Meal, Cargill, | 13.7 | 10.1 | 13.7 | 10.34 | 13.7 | 9.8 |
| Whole Apple Powder 16 mesh, Treetop | 17 | 12.5 | 12 | 9.06 | 7 | 5.01 |
| Water | - | 26 | - | 24 | - | 28 |
| Emulsifier, Aldo DO, Lonza | - | 0.5 | - | 0.5 | - | 0.5 |
| | | | | | | |
| Sugar content in the Blend (%) | 24.2 | - | 17 | - | 10 | - |
| Dough Sheet Strength (gf) | - | 111.62 | - | 159.54 | - | 181.99 |
| Dough moisture content (%) | - | 26.4 | - | 26.3 | - | 28.79 |
| Dough elasticity (mm) | - | -7.81 | - | -6.14 | - | -12.93 |
| Dough thickness (in) | - | 0.024-0.027 | - | 0.024-0.026 | - | 0.025-0.029 |
| Product | | | | | | |
| Chip Fracture (gf) | 291.7 | - | 288 | - | 337 | - |
| Product Density (g/cc) | 0.97 | - | 0.83 | - | 0.78 | - |
| Fat content (%) | 23.5 | - | 19.1 | - | 21.9 | - |
| Moisture content (%) | 2.16 | - | 1.98 | - | 2.23 | - |
| Glass Transition Temperature - Tg (°C) | 56 | - | 64 | - | 76 | - |
| Water Absorption Index (WAI) | 3.2 | - | 3.2 | - | 3.7 | - |

Table E2 shows four exemplary compositions wherein a dry blend is prepared and then made into a dough. The dough is sheeted, cut into fabricated snack pieces and fried to make a fruit based snack chip according to the present invention. Certain properties of the dough, sheet and resulting snack chip are also given in Table E2.

TABLE E2

EXAMPLES 4 - 7

| Ingredients | Example 4 | Example 5 | Example 6 | Example 7 |
|---|---|---|---|---|
| | % Dry Blend | % Dry Blend | % Dry Blend | % Dry Blend |
| Extruded white rice flour, Masellis, . | 33.5 | 33.5 | 35 | 40 |
| Waxy Rice Flour, Remyflow S 200, Remy, | 9.4 | 9.4 | 10 | 0 |
| Wheat Starch, Midsol 50, MGP | 9.4 | 9.4 | 0 | 0 |
| Waxy rice starch XS DR-P, Remy, BE. . | 0 | 0 | 0 | 10 |
| Apple Powder, Low Moisture 20 mesh, Treetop | 8.5 | 0.0 | 0 | 0 |
| Apple Powder, Low Moisture 20 mesh, Unique Ingredients, Ecuador | 0 | 0 | 30 | 0 |
| Acetylated rice starch, Remygel 663, Remy, BE. | 0 | 0 | 10 | 0 |
| Pregel Yellow Corn Meal, Cargill, | 13.7 | 13.7 | 15 | 15 |
| Whole Apple Powder 16 mesh, . Treetop | 8.5 | 0 | 0 | 35 |
| Strawberry Powder | 17 | 34 | 0 | 0 |
| Water (%) | 30 | 30 | 30 | 30 |
| Emulsifier, Aldo DO, Lonza (%) | 0.7 | 0.7 | 0.7 | 0.7 |
| Oil – Cottonseed oil, IF | | | | |
| | | | | |
| Sugar content in the blend (%) | 19 | 14 | 21 | 24 |
| Dough | | | | |
| Sheet Strength (gf) | 98.01 | 115.72 | 135.43 | 93.14 |

| Dough moisture content (%) | 28.30 | 27.71 | 27.89 | 27.59 |
|---|---|---|---|---|
| Dough Elasticity (mm) | -13 | -13.86 | -18.6 | -25.53 |
| Dough Thickness (in) | 0.025 – 0.028 | 0.024 - 0.027 | 0.024 - 0.028 | 0.026 – 0.029 |
| Product | | | | |
| Breaking Strength (gf) | 269 | 289 | 348 | 235 |
| Product Density (g/cc) | 0.99 | 0.83 | 0.83 | 0.77 |
| Fat content (%) | 26.5 | 26.2 | 31.7 | 26.2 |
| Moisture content (%) | 2.7 | 2.2 | 2.0 | 2.1 |
| Glass Transition Temperature – Tg (°C) | 56 | 66 | 54 | 56 |
| Water Absorption Index (WAI) | 4.9 | 5.2 | 5.4 | 4.7 |

## Claims

1. A dough composition comprising from 15% to 40%, by weight of the dough, of water and from 60% to 85%, by weight of the dough, dry ingredients, and wherein the dry ingredients comprise:

    a) from 3% to 50%, by weight of the dry ingredients, dehydrated fruit material dried to a moisture content below 15% by weight and having a sugar content of from 15% to less than 50%, by weight of the dehydrated fruit material; and
    b) from 20% to 97%, by weight of the dry ingredients, rice based materials, selected from the group consisting of rice flour, waxy rice starch, waxy rice flour, acetylated rice starch, cross linked rice starch and mixtures thereof.

2. The dough composition of claim 1, wherein the rice flour is selected from the group consisting of medium grain rice flour, long grain rice flour, and mixtures thereof.

3. The dough composition of claim 1 wherein the dehydrated fruit material is selected from the group consisting of apple based flour, strawberry based flour, banana based flour, pear based flour, apricot based flour, cranberry based flour, any dry fruit with sugar content of from 15% to less than 50%, and mixtures thereof.

4. The dough composition of claim 1, wherein the water content is from 18% to 35%, and preferably from 22% to 30%, by weight of the dough.

5. The dough composition of claim 1, which further comprises an emulsifier in a concentration of 0.2% to 8.0%, preferably from 0.5% to 8%, preferably from 2% to 7%, and more preferably from 3% to 5%, by weight of the dough.

6. The dough composition of claim 1, which further comprises flour selected from the group consisting of wheat, corn, tapioca, barley, cassava, oat, sago, potato, masa flour and mixtures thereof.

7. The dough composition of claim 1, further comprising from 0% to 20%, preferably from 0% to 10%, and even more preferably from 0% to 7.5%, by weight, maltodextrin.

8. A fruit based chip obtainable by cooking the dough composition of claim 1.

9. A fruit based chip according to claim 8 obtainable by frying in oil the dough composition of claim 1 containing from 0 grams to 11 grams of fat per 28 grams of chips, and more preferably less than 5 grams of fat per 28 grams of chips.

10. A fruit based chip according to claim 8 obtainable by frying in oil the dough composition of claim 1 having a density of from 0.4 to 1.6g/ml, preferably from 0.7 to 1.2g/ml, and more preferably from 0.8 to 1.0 g/ml.

11. A fruit based chip according to claim 8obtainable by frying in oil the dough composition of claim 1 having a fracture strength from 735.5mN to 4903.3mN (75 gf to 500 gf), preferably from 931.6mN to 3922.7mN (95 to 400 gf), and most preferably from 1176.8mN to 1961.3mN (120 to about 200 gf).

**Patentansprüche**

1. Teigzusammensetzung, umfassend von 15 % bis 40 %, bezogen auf das Gewicht des Teiges, Wasser und von 60 % bis 85 %, bezogen auf das Gewicht des Teiges, Trockenbestandteile, und worin die Trockenbestandteile umfassen:

   a) von 3 % bis 50 %, bezogen auf das Gewicht der Trockenbestandteile, Trockenfruchtmaterial, das zu einem Feuchtigkeitsgehalt unter 15 Gew.% getrocknet ist und das einen Zuckergehalt von 15 % bis weniger als 50 %, bezogen auf das Gewicht des Trockenfruchtmaterials, aufweist; und
   b) von 20 % bis 97 %, bezogen auf das Gewicht der Trockenbestandteile, Reisbasierte Materialien, die aus der Gruppe ausgewählt sind, bestehend aus Reismehl, wachsartiger Reisstärke, wachsartigem Reismehl, acetylierter Reisstärke, vernetzter Reisstärke und Mischungen davon.

2. Teigzusammensetzung gemäß Anspruch 1, worin das Reismehl aus der Gruppe ausgewählt ist, bestehend aus mittelkörnigem Reismehl, langkörnigem Reismehl und Mischungen davon.

3. Teigzusammensetzung gemäß Anspruch 1, worin das Trockenfruchtmaterial aus der Gruppe ausgewählt ist, bestehend aus Apfel-basiertem Mehl, Erdbeer-basiertem Mehl, Bananen-basiertem Mehl, Birnen-basiertem Mehl, Aprikosen-basiertem Mehl, Kranbeeren-basiertem Mehl, einer beliebigen Trockenfrucht mit einem Zuckergehalt von 15 % bis weniger als 50 %, und Mischungen davon.

4. Teigzusammensetzung gemäß Anspruch 1, worin der Wassergehalt von 18 % bis 35 % und bevorzugt von 22 % bis 30 %, bezogen auf das Gewicht des Teiges, ist.

5. Teigzusammensetzung gemäß Anspruch 1, die weiter ein Emulgiermittel in einer Konzentration von 0,2 % bis 8,0 %, bevorzugt von 0,5 % bis 8 %, bevorzugt von 2 % bis 7 % und besonders bevorzugt von 3 % bis 5 %, bezogen auf das Gewicht des Teiges, umfasst.

6. Teigzusammensetzung gemäß Anspruch 1, die weiter Mehl umfasst, das aus der Gruppe ausgewählt ist, bestehend aus Weizen, Mais, Tapioka, Gersten, Maniok, Hafer, Sago, Kartoffel, Masamehl, und Mischungen davon.

7. Teigzusammensetzung gemäß Anspruch 1, die weiter von 0 Gew.% bis 20 Gew.%, bevorzugt von 0 Gew.% bis 10 Gew.%, und besonders bevorzugt von 0 Gew.% bis 7,5 Gew.% Maltodextrin umfasst.

8. Frucht-basierter Chip, der durch Kochen der Teigzusammensetzung gemäß Anspruch 1 erhältlich ist.

9. Frucht-basierter Chip gemäß Anspruch 8, der durch Frittieren in Öl der Teigzusammensetzung gemäß Anspruch 1 erhältlich ist, enthaltend von 0 g bis 11 g Fett pro 28 g Chips und besonders bevorzugt weniger als 5 g Fett pro 28 g Chips.

10. Frucht-basierter Chip gemäß Anspruch 8, der durch Frittieren in Öl der Teigzusammensetzung gemäß Anspruch 1 erhältlich ist, mit einer Dichte von 0,4 bis 1,6 g/ml, bevorzugt von 0,7 bis 1,2 g/ml und besonders bevorzugt von 0,8 bis 1,0 g/ml.

11. Frucht-basierter Chip gemäß Anspruch 8, der durch Frittieren in Öl der Teigzusammensetzung gemäß Anspruch 1 erhältlich ist, mit einer Bruchfestigkeit von 735,5 mN bis 4903,3 mN (75 gf bis 500 gf), bevorzugt von 931,6 mN bis 3922,7 mN (95 bis 400 gf) und besonders bevorzugt von 1176,8 mN bis 1961,3 mN (120 bis ungefähr 200 gf).

**Revendications**

1. Composition de pâte, comprenant de 15 % à 40 %, en poids de la pâte, d'eau et de 60 % à 85 %, en poids de la pâte, d'ingrédients secs, et dans laquelle les ingrédients secs comprennent :

    a) de 3 % à 50 %, en poids des ingrédients secs, de matériau de fruit déshydraté séché jusqu'à une teneur en humidité inférieure à 15 % en poids et ayant une teneur en sucre de 15 % à moins de 50 %, en poids du matériau de fruit déshydraté ; et
    b) de 20 % à 97 % en poids des ingrédients secs, de matériaux à base de riz, choisis dans le groupe comprenant la farine de riz, l'amidon de riz cireux, la farine de riz cireux, l'amidon de riz acétylé, l'amidon de riz réticulé et leurs mélanges.

2. Composition de pâte selon la revendication 1, dans laquelle la farine de riz est choisie dans le groupe comprenant la farine de riz à grains moyens, la farine de riz longs grains, et leurs mélanges.

3. Composition de pâte selon la revendication 1, dans laquelle le matériau de fruit déshydraté est choisi dans le groupe comprenant de la farine à base de pomme, de la farine à base de fraise, de la farine à base de banane, de la farine à base de poire, de la farine à base d'abricot, de la farine à base de canneberge, tout fruit sec ayant une teneur en sucre de 15 % à moins de 50 % et leurs mélanges.

4. Composition de pâte selon la revendication 1, dans laquelle la teneur en eau est de 18 % à 35 %, et de préférence de 22 % à 30 %, en poids de la pâte.

5. Composition de pâte selon la revendication 1, qui comprend en outre un émulsifiant en une concentration de 0,2 % à 8,0 %, de préférence de 0,5 % à 8 %, de préférence de 2 % à 7 %, et de manière davantage préférée de 3 % à 5 %, en poids de la pâte.

6. Composition de pâte selon la revendication 1, qui comprend en outre de la farine choisie dans le groupe comprenant du blé, du maïs, du tapioca, de l'orge, du manioc, de l'avoine, du sagou, de la pomme de terre, de la farine masa, et leurs mélanges.

7. Composition de pâte selon la revendication 1, comprenant en outre de 0 % à 20 %, de préférence de 0 % à 10 % et de manière encore davantage préférée, de 0 % à 7,5 %, en poids, de maltodextrine.

8. Chips à base de fruit pouvant être obtenu en cuisant la composition de pâte selon la revendication 1.

9. Chips à base de fruit selon la revendication 8 pouvant être obtenu en faisant frire dans l'huile la composition de pâte selon la revendication 1, contenant de 0 gramme à 11 grammes de matière grasse pour 28 grammes de chips, et de manière davantage préférée moins de 5 grammes de matière grasse pour 28 grammes de chips.

10. Chips à base de fruit selon la revendication 8 pouvant être obtenu en faisant frire dans l'huile la composition de pâte selon la revendication 1, ayant une densité de 0,4 à 1,6 g/ml, de préférence de 0,7 à 1,2 g/ml, et de manière davantage préférée de 0,8 à 1,0 g/ml.

11. Chips à base de fruit selon la revendication 8 pouvant être obtenu en faisant frire dans l'huile la composition de pâte selon la revendication 1 ayant une résistance à la fracture de 735,5 mN à 4903,3 mN (75 gf à 500 gf), de préférence de 931,6 mN à 3922,7 mN (95 à 400 gf), et de manière davantage préférée de 1176,8 mN à 1961,3 mN (120 à environ 200 gf).

## REFERENCES CITED IN THE DESCRIPTION

### Patent documents cited in the description

- US 5132127 A
- US 5085884 A, Young
- US 5422131 A, Elsen
- US 6558730 B
- US 9507610 W, Dawes
- WO 9601572 A
- US 3626466 A, Liepa

### Non-patent literature cited in the description

- AOAC International. Official Methods 922.06. AOAC International
- **R.A. ANDERSON et al.** Gelatinization of Corn Grits By Roll-and Extrusion-Cooking. *CEREAL SCIENCE TODAY,* 1969, vol. 14 (1), 4